(19) **Europäisches Patentamt**
**European Patent Office**
**Office européen des brevets**

(11) **EP 3 079 056 B1**

(12) **EUROPEAN PATENT SPECIFICATION**

(45) Date of publication and mention
of the grant of the patent:
**16.12.2020 Bulletin 2020/51**

(51) Int Cl.:
***G06F 7/548*** *(2006.01)*

(21) Application number: **16164224.4**

(22) Date of filing: **07.04.2016**

(54) **SYSTEMS AND METHODS FOR COMPUTING MATHEMATICAL FUNCTIONS**

SYSTEME UND VERFAHREN ZUR BERECHNUNG MATHEMATISCHER FUNKTIONEN

SYSTÈMES ET PROCÉDÉS PERMETTANT DE CALCULER DES FONCTIONS MATHÉMATIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.04.2015 US 201514680791**

(43) Date of publication of application:
**12.10.2016 Bulletin 2016/41**

(73) Proprietor: **Vivante Corporation
Santa Clara, CA 95054 (US)**

(72) Inventors:
• **Zhong, Lefan
Santa Clara, CA 95054 (US)**
• **Kao, Wei-Lun
San Jose, CA 95002 (US)**

(74) Representative: **Betten & Resch
Patent- und Rechtsanwälte PartGmbB
Maximiliansplatz 14
80333 München (DE)**

(56) References cited:
**US-A1- 2012 054 256**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

FIELD OF THE INVENTION

The invention related generally to the field of computer systems and more particularly to computational functions for graphics processor chips.

BACKGROUND OF THE INVENTION

Graphics processor chips traditionally employ various mathematical functions implemented in hardware for fast drawing and rendering speed. Some examples of these mathematical functions include reciprocal function ("RCP"), reciprocal square root function ("SQRT"), exponential function ("EXP") and logarithmic function ("LOG"). These mathematical functions are implemented in prior art as separate circuitry blocks with different algorithms.

For example, in a three cycle RCP implementation in the prior art, a floating point number x may be represented as a concatenation of a most significant bits ("MSB") portion x0 and a least significant bits ("LSB") portion x1 where x1=x-x0. The main calculation for reciprocal of x is in the calculation of mantissa. Mantissa is typically calculated in a two term function: f(x)=a+b(x-x0) in the prior art, where a and b are data look up tables. In a typical example, where more than 21 bit precision is required for a graphics processor, there needs to be over 16,000 entries in each of the data look up tables a and b to achieve the required precision. This is based on a 14 bit x0 and data look up tables with 2.sup.14 entries each. The hardware implementation of such large data look up tables results in large gate counts proportional to the size of the data look up tables. Graphic processor chips may include hardware implementation of several mathematical functions. In prior art examples, each of these mathematical functions requires large gate count and is typically combined with other methods. It is common technique in the prior art to implement each of these mathematical functions with separate logic circuitry and separate large data look up tables. As high speed and mobile applications demand higher integration and lower power consumption, there are needs for an efficient algorithm to implement these various mathematical functions.

US 2012/054256 A1 discloses a circuitry for computing a tangent function of an input value including first look-up table circuitry that stores pre-calculated tangent values of a limited number of sample values, circuitry for inputting bits of the input value of most significance as inputs to the first look-up table circuitry to look up one of the pre-calculated tangent values as a first intermediate tangent value, circuitry for calculating a second intermediate tangent value from one or more ranges of remaining bits of the input value, and circuitry for combining the first intermediate tangent value and the second intermediate tangent value to yield the tangent function of the input value.

BRIEF DESCRIPTION OF THE DRAWINGS

Objects of the present invention are achieved by subject matters of independent claims. Dependent claims define exemplary embodiments.

In order that the advantages of the invention will be readily understood, a more particular description of the invention briefly described above will be rendered by reference to specific embodiments illustrated in the appended drawings. Understanding that these drawings depict only typical embodiments of the invention and are not therefore to be considered limiting of its scope, the invention will be described and explained with additional specificity and detail through use of the accompanying drawings, in which:

Fig. 1 is a schematic block diagram of a computer system;

Fig. 2 is a block diagram illustrating a 6 stage unified hardware pipeline that can be used in an embodiment of the present invention;

Fig. 3 is a block diagram illustrating a 3 stage RCP hardware pipeline that can be used in an embodiment of the present invention;

Fig. 4 is a flow chart diagram illustrating an algorithm for calculating various exemplary data look up table that can be used in an embodiment of the present invention;

Fig. 5 is a flow chart diagram illustrating an alternative unified hardware pipeline according to an embodiment of the present invention; and

Fig. 6 is a flow chart diagram illustrating an alternative pipeline for calculating inverse trigonometric functions according to an embodiment of the present invention.

DETAILED DESCRIPTION

It will be readily understood that the components of the present invention, as generally described and illustrated in the Figures herein, could be arranged and designed in a wide variety of different configurations. Thus, the following more detailed description of the embodiments of the invention, as represented in the Figures, is not intended to limit the scope of the invention, as claimed, but is merely representative of certain examples of presently contemplated embodiments in accordance with the invention. The presently described embodiments will be best understood by reference to the drawings, wherein like parts are designated by like numerals throughout.

The invention has been developed in response to the present state of the art and, in particular, in response to the problems and needs in the art that have not yet been fully solved by currently available apparatus and methods.

Embodiments in accordance with the present invention may be embodied as an apparatus or method. Accordingly, the present invention may take the form of an entirely hardware embodiment or an embodiment combining software and hardware aspects that may all generally be referred to herein as a "module" or "system.".

Any combination of one or more computer-usable or computer-readable media may be utilized. For example, a computer-readable medium may include one or more of a portable computer diskette, a hard disk, a random access memory (RAM) device, a read-only memory (ROM) device, an erasable programmable read-only memory (EPROM or Flash memory) device, a portable compact disc read-only memory (CDROM), an optical storage device, and a magnetic storage device. In selected embodiments, a computer-readable medium may comprise any non-transitory medium that can contain, store, communicate, propagate, or transport the program for use by or in connection with the instruction execution system, apparatus, or device.

Computer program code for carrying out operations of the present invention may be written in any combination of one or more programming languages, including an object-oriented programming language such as Java, Smalltalk, C++, or the like and conventional procedural programming languages, such as the "C" programming language or similar programming languages. The program code may execute entirely on a computer system as a stand-alone software package, on a stand-alone hardware unit, partly on a remote computer spaced some distance from the computer, or entirely on a remote computer or server. In the latter scenario, the remote computer may be connected to the computer through any type of network, including a local area network (LAN) or a wide area network (WAN), or the connection may be made to an external computer (for example, through the Internet using an Internet Service Provider).

The present invention is described below with reference to flowchart illustrations and/or block diagrams of methods and apparatus (system) according to embodiments of the invention. It will be understood that each block of the flowchart illustrations and/or block diagrams, and combinations of blocks in the flowchart illustrations and/or block diagrams, can be implemented by using computer program instructions or code. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a non-transitory computer-readable medium that can direct a computer or other programmable data processing apparatus to function in a particular manner, such that the instructions stored in the computer-readable medium produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

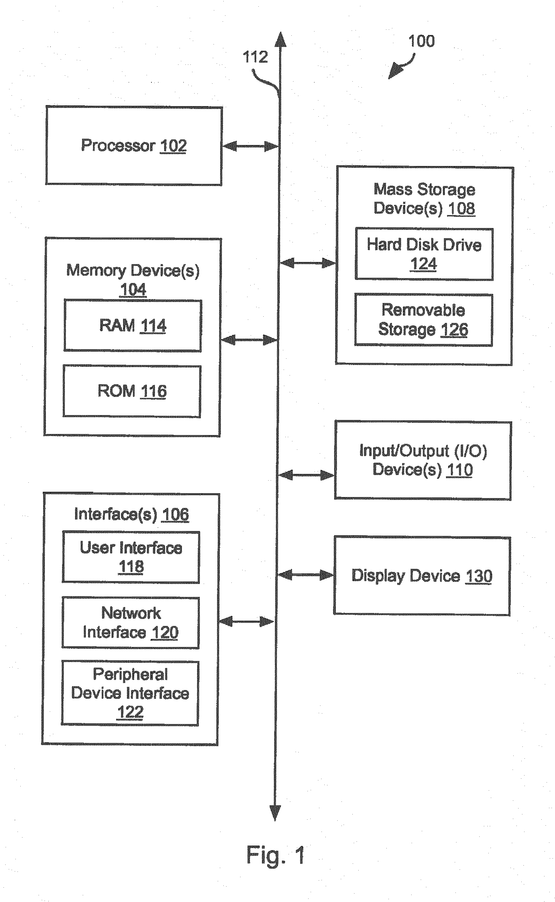

Fig. 1 is a block diagram illustrating an example computing device 100. Computing device 100 may be used to perform various procedures, such as those discussed herein. Computing device 100 can function as a server, a client, or any other computing entity. Computing device can perform various monitoring functions as discussed herein, and can execute one or more application programs, such as the application programs described herein. Computing device 100 can be any of a wide variety of computing devices, such as a desktop computer, a notebook computer, a server computer, a handheld computer, tablet computer and the like.

Computing device 100 includes one or more processor(s) 102, one or more memory device(s) 104, one or more interface(s) 106, one or more mass storage device(s) 108, one or more Input/Output (I/O) device(s) 110, and a display device 130 all of which are coupled to a bus 112. Processor(s) 102 include one or more processors or controllers that execute instructions stored in memory device(s) 104 and/or mass storage device(s) 108. Processor(s) 102 may also include various types of computer-readable media, such as cache memory.

Memory device(s) 104 include various computer-readable media, such as volatile memory (e.g., random access memory (RAM) 114) and/or nonvolatile memory (e.g., read-only memory (ROM) 116). Memory device(s) 104 may also include rewritable ROM, such as Flash memory.

Mass storage device(s) 108 include various computer readable media, such as magnetic tapes, magnetic disks, optical disks, solid-state memory (e.g., Flash memory), and so forth. As shown in Fig. 1, a particular mass storage device is a hard disk drive 124. Various drives may also be included in mass storage device(s) 108 to enable reading from and/or writing to the various computer readable media. Mass storage device(s) 108 include removable media 126 and/or non-removable media.

I/O device(s) 110 include various devices that allow data and/or other information to be input to or retrieved from computing device 100. Example I/O device(s) 110 include cursor control devices, keyboards, keypads, microphones, monitors or other display devices, speakers, printers, network interface cards, modems, lenses, CCDs or other image capture devices, and the like.

Display device 130 includes any type of device capable of displaying information to one or more users of computing device 100. Examples of display device 130 include a monitor, display terminal, video projection device, and the like.

Interface(s) 106 include various interfaces that allow computing device 100 to interact with other systems, devices, or computing environments. Example interface(s) 106 include any number of different network interfaces 120, such as interfaces to local area networks (LANs), wide area networks (WANs), wireless networks, and the Internet. Other interface(s) include user interface 118 and peripheral device interface 122. The interface(s) 106 may also include one or more user interface elements 118. The interface(s) 106 may also include one or more peripheral interfaces such as interfaces for printers, pointing devices (mice, track pad, etc.), keyboards, and the like.

Bus 112 allows processor(s) 102, memory device(s) 104, interface(s) 106, mass storage device(s) 108, and I/O device(s) 110 to communicate with one another, as well as other devices or components coupled to bus 112. Bus 112 represents one or more of several types of bus structures, such as a system bus, PCI bus, IEEE 1394 bus, USB bus, and so forth.

For purposes of illustration, programs and other executable program components are shown herein as discrete blocks, although it is understood that such programs and components may reside at various times in different storage components of computing device 100, and are executed by processor(s) 102. The systems and procedures described herein can be implemented in hardware, or a combination of hardware and software. For example, one or more application specific integrated circuits (ASICs) can be programmed to carry out one or more of the systems and procedures described herein.

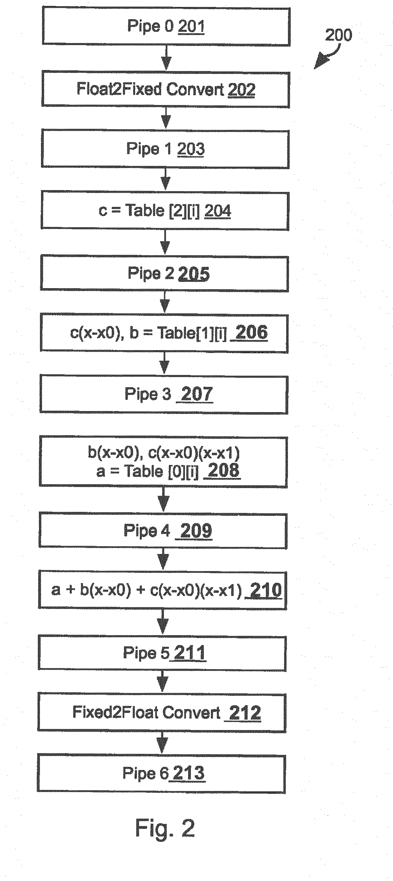

Fig. 2 is a block diagram illustrating a 6 stage unified hardware pipeline according to an embodiment of the present invention. Here, block 201, block 203, block 205, block 207, block 209, block 211, and block 213 are the register stages of the pipeline. Block 202 is a floating point to fixed point converter. Block 212 is a fixed point to floating point converter. In an example, block 212 may be configured to be bypassing circuit according to an opcode (i.e., a configuration instruction, a micro-code, or the like) for implementing an EXP function. In another example block 202 may be configured to be bypassing circuit according to another opcode (i.e., a configuration instruction, a micro-code, or the like) for implementing an LOG function. In still other examples, both block 202 and block 212 may be configured to be bypassing circuits according to yet another opcode (i.e., a configuration instruction, a micro-code, or the like) in implementing RCP or SQRT functions. In some examples, block 204, 206, 208, and 210 may implement various portions of the quadratic approximation for calculating mathematical functions such as RCP, SQRT, EXP, LOG or the like based on separate data look up tables. For example, block 204 implements data table look up for c based on an integer i corresponding to mantissa of a floating point number x. Likewise, block 206 implements data table look up for b. During the same pipeline stage, block 206 also calculates $c(x-x0)$. Similarly, block 208 implements data table look up for a as well as calculation of $b(x-x0)$ and $c(x-x0)(x-x1)$. Block 210 implements summation of three terms for calculating the quadratic approximation. The above description is not limited to the details described above and various modifications or alternations as made obvious by the above description may be made.

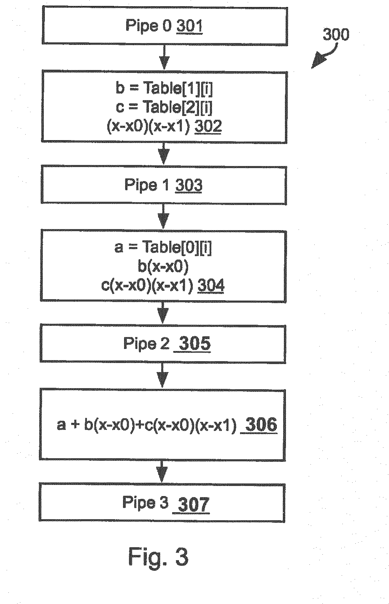

Fig. 3 is a block diagram illustrating a 3 stage RCP hardware pipeline according to an embodiment of the present invention. Here, block 301, block 303, block 305, and block 307 are the register stages of the pipeline. In some examples, block 302, 304, and 306 may implement various portions of the quadratic approximation. For example, block 302 implements data table look up for b and c based on an integer i corresponding to MSB of mantissa of a floating point number. During the same pipeline stage, block 302 also calculates $(x-x0)(x-x1)$. Likewise, block 304 implements data table look up for a as well as calculation of $b(x-x0)$ and $c(x-x0)(x-x1)$. In some implementations $(x1-x)$ may be calculated as $NOT(x-x0)$, where NOT is the bitwise operation that changes 1 to 0 and 0 to 1. Block 306 implements summation of three terms for calculating the quadratic approximation. The above description is not limited to the details described above and various modifications or alternations as made obvious by the above description may be made.

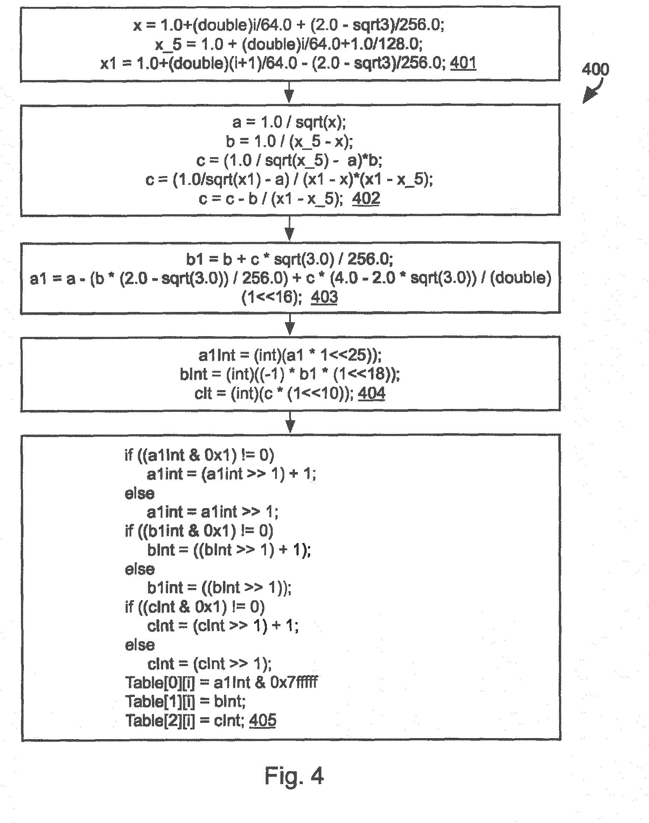

Fig. 4 is a flow chart diagram illustrating an exemplary algorithm for calculating various data look up tables according to an embodiment of the present invention. Here, an exemplary algorithm is illustrated for computing data tables a, b and c for SQRT. In this example, table[0][i]=a, table[1][i]=b and table[2][i]=c. Three linear equations are used to compute three values a, b and c. These three equations are solved by first computing the start point (i.e., x), middle point (i.e., x.sub.--5) and end point (i.e., x1) of a segment (401). Blocks 402 and 403 compute a, b and c in floating point format. Block 404 converts a, b and c to integer format. Block 405 does the rounding and produces the final value. As another example, the "sqrt" function in block 402 may be replaced by reciprocal function to adapt the algorithm for computing data tables a, b and c for RCP. In other examples, the "sqrt" function in block 402 may be replaced by other functions (e.g., EXP, LOG, or the like) to adapt the algorithm for computing data tables a, b and c for these other functions. The above description is not limited to the details described above and various modifications or alterations as made obvious by the above description may be made. The flow chart of Fig. 4 may be suitable for implementing a table of 64 entries. Other entries, such as 128 entries may also be used.

The above-described method provides a unified method to compute the list of above-identified transcendental functions with one unified hardware pipeline in floating point values, such as for a vertex shader and pixel shader in a mobile graphics chip. This technique may be based on computing of the following: $F(x) = 1/x$; $F(x) = 1/x^{(1/2)}$; $F(x) = 2^x$ and $F(x) = LOG2(x)$.

These functions are implemented with a unified hardware pipe that performs the following function: $F(x) = a + b(x-x0) + c(x-x0)(x-x1)$ (hereinafter "the interpolation function"). The approximation may be done in 64, 128, or some other number segments, where x0 is the starting value of a segment and x1 is the ending value of a segment. X0 is the MSB (most significant bits) portion of x, (x - x0) is the LSB (least significant bits) of portion of x. The value of x is between x0 and x1 (x0 <= x < x1). The values a, b and c are from three separate tables, such as tables embedded in hardware.

For EXP, a floating point to fixed point number conversion stage is positioned before the unified hardware pipe. For LOG, there is a fixed point to floating point number conversion after the unified hardware pipe. The hardware flow and function is the same for each of the four functions, except the table chosen for each function is different. An input opcode chooses the function. The low latency efficiency RCP (reciprocal) implementation based on this approach can be reduced to 3 cycles.

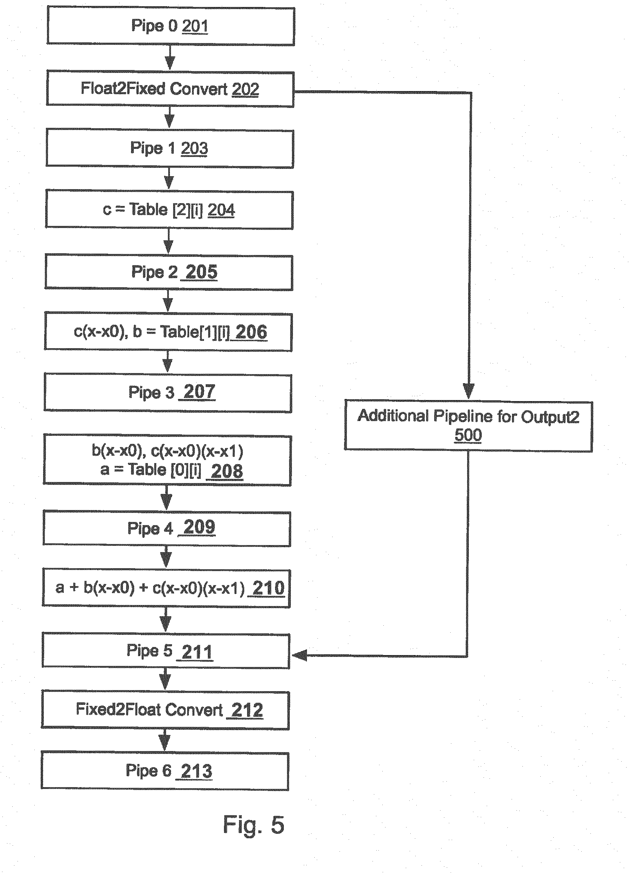

Referring to Fig. 5, logic devices may be added to the pipeline of Figs. 1 and 2 to speed up the calculation of $Sin(\pi x)$, $Cos(\pi x)$, $LOG2(x)$ and DIV (i.e. y/x). For example, the additional logic may be implemented based on the formula: $Sin(\pi x) = Sin(\pi*(IntX + FracX)) = (-1)^{IntX} *Sin(\pi*FracX)$, where IntX is the integer portion of an input floating point argument x and FracX is the fractional portion of the input x. Accordingly, instead of approximate $Sin(\pi x)$ directly, it may be approximated according to $F(x) = Sin(\pi*FracX)/FracX$. Accordingly, the modified pipeline of Fig. 5 may produce an additional output (output2) using the additional pipeline 500, output2 being equal to FracX, such as from the Float2Fixed converting logic 202. The pipeline may be further modified to compute $Sin(\pi x) = F(x)*output2$, where F(x) is the approximation of the function $Sin(\pi*FracX)/FracX$, such as according to the pipeline stages 203-210. Specifically, F(x) is the result of interpolation among entries of tables selected according to the value of FracX as the input argument, such as according to the pipelines and methods as described hereinabove. In the illustrated embodiment, multiplication of F(x) by output2 may be performed at stage 211 of the pipeline. For $Cos(\pi x)$, $Cos(\pi x) = Sin(\pi(x+0.5))$. So the same logic of $Sin(\pi x)$ may be used to get the result. In some embodiment, $Sin(\pi x)$ is computed using $F(x) = Sin(\pi*FracX)/FracX$ and output2 = FracX if (FracX <= 0.5f), where 0.5f is a floating point value equal to ½. In some embodiments for $Sin(\pi x)$, if FracX > 0.5f, $F(x) = Sin(\pi*(1.0 - FracX))/(1.0 - FracX)$, and output2 is 1.0-FracX. For example, more generally, for $Sin(\pi x)$, $F(x) = ((-1)^{IntX})*Sin(\pi*Min(FracX, 1.0 - FracX))/Min(FracX, 1.0 - FracX)$, the output2 is Min(FracX, 1.0 - FracX), where IntX is the integer portion of x.

When input argument x is close to 1.0, Log2(x) is very small. Instead of approximation LOG2(x) directly, it may be approximated as $F(x) = Log2(x - 1)/(x - 1)$. Accordingly, for LOG2 output2 may be set equal to x - 1. So $LOG2(x) = F(x)*output2$, where output2 is equal to (x - 1) and F(x) is an approximation of LOG2(x-1)/(x-1) computed using tables and interpolation within the hardware pipeline as described herein. The values of x for which this modification is performed may be selected based on the floating point representation used. For example, in some embodiments, when x is in the range of [0.75, 1.5), $F(x) = LOG2(x-1)/(x-1)$, output2 = (x-1). Otherwise, for LOG2(x), $F(x) = LOG2(x)$, and output2 = 1.0f.

For DIV (e.g. y/x), using the relationships $y/x = y*(1/x) = y*Rcp(x)$, there may be 1/x underflow issue, when $|x| > 2^{126}$, $1/x = 0$ in 32 bit floating point expression. Underflow at $|x| > 2^{126}$ occurs since the maximum floating point value is $2^{127}*1.11111111$ and in "floating point normal expression", the minimum value is $2^{(-126)}$. Where denormalized numbers are used, the minimum value can be $2^{(-149)}$. In this case, both input arguments x and y may be scaled by $2^{32}$, i.e. $y/x = (y/2^{32})/(x/2^{32})$. So in the hardware pipline, an additional pipeline stage may be used to scale down both y/x when x is over some range (e.g. greater than $2^{64}$). This additional stage may be performed prior to pipeline steps for selecting table values and performing the interpolation steps as described herein.

$G(x) = Acos(x)/Sqrt(1-x*x)$ is very smooth in [0, 1.0], i.e. its derivative is finite and is readily approximated using polynomials. G(x) may be approximated in a similar way as described above with respect to SinPi(x)/x. In particular, the arguments may be converted from floating point to 24 bit fixed point values, G(x) may then be performed on the fixed point version using look up tables and polynomial approximation as described above, and the output of the polynomial approximation may then be converted to a floating point value. In particular, the polynomial approximation may be performed using a piecewise quadratic approximation as described above. Furthermore, a preprocess function for aTan2(x,y), may be used in order to adjust (x,y) components of ±infinity.

Acos(x) may be obtained from G(x) as follows:

$$Acos(x) = G(x) * Sqrt(1-x*x)$$

and

$$Acos(-x) = \pi - G(-x)*Sqrt(1-x*x) \text{ for } x \geq 0,$$

In order to unify the above 2 formulas (otherwise "if else" instructions would be required), some embodiments use the function (out1, out2) = InvTrig(x, y, opcode), which takes two inputs (x, y) and outputs Out1 and Out2 based on the function G(Z), where Z is an input determined based on the opcode.

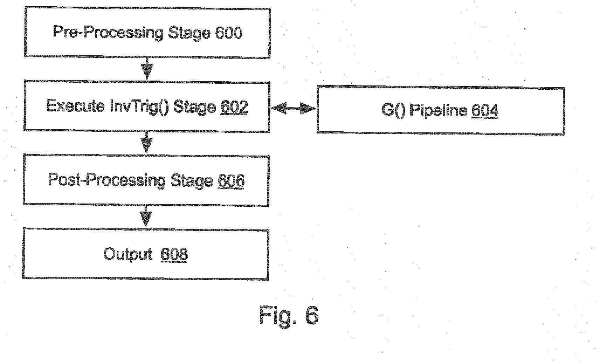

Referring to Fig. 6, an apparatus for computing inverse trigonometric functions may be as illustrated. A pre-processing stage 600 processes input argument x or input arguments x and y and generates one or more outputs. In particular, the pre-processing stage 600 may include circuits effective to provide output arguments in response to input arguments as outlined in Table 1.

### Table 1: Pre-Processor Stage Function

| Opcode | Input Argument(s) | Output Argument(s) |
|---|---|---|
| ACos(x), ACosPi(x) | x, don't care | u = 1 - x*x (use Fma)<br>s = Sqrt(u) |
| ASin(x), ASinPi(x) | x, don't care | u = 1 - x*x (use Fma)<br>s = Sqrt(u) |
| A Tan(x) ATanPi(x), | x, don't care | u = 1 + x*x (use Fma)<br>s = Rsqrt(u)<br>t = s*x |
| ATan2(x,y), A Tan2Pi(x,y), Input (s, t) | x, y | (x', y') = new(x, y)<br>u = x'*x' + y'*y' (use Dp2)<br>v = Rsqrt(u)<br>s = x'*v<br>t = y'*v |

The output arguments from the pre-processing stage 600 may be input to stage 602 that executes a function "InvTrig()," which processes the output arguments of the pre-processing stage and/or the original input arguments as outlined in Table 2 in accordance with the opcode received with the input arguments. The InvTrig stage 602 may produce two outputs Out1 and Out2, one or both of which may be used. In Table 1, "Fma" refers to an operation whereby the function a*b+c is performed with a and b in high precision before adding c, as opposed to reducing the precision of a and b to avoid overflow. In Table 1, "Dp2" refers to a function whereby the function a*b+kc*d is performed with dual precision, i.e. the multiplications (a*b) and (c*d) are performed using the arguments a, b, c, and d at half precision to avoid overflow and the addition is performed at full precision. Sqrt (square root) and Rsqrt (reciprocal of square root) may also be calculated using the pipelines 604 that may have some or all of the attributes of the pipelines of Figs. 2-5. As shown in Table 1, Sqrt and Rsqrt may be calculated in the pre-processor stage.

### Table 2: InvTrig() Functions

| Opcode | Out1 | Out2 |
|---|---|---|
| ACos(x), ACosPi(x) | G(\|x\|)*Sign(x) | $x \geq 0 ? 0 : \pi$ |
| ASin(x), ASinPi(x) | G(s) | Not Used |
| A Tan(x) ATanPi(x), | $s < 2^{-40} ? 0 : G(s)$ | $s < 2^{-40} ? Sign(x)* \pi/2 : 0$ |
| ATan2(x,y), ATan2Pi(x,y), Input (s, t) | G(s)*(Sign(s))<br>(Sign(x) = Sign(s)) | $x \geq 0 ? 0 : Sign(t)*\pi$<br>(Sign(y) = Sign(t)) |

As is apparent in Table 2, for each opcode, at least some values of the input arguments will result in calculating a function G(Z) (Z being x, s, etc. as outlined in Table 2). In the illustrated embodiment G(Z) outputs a value G(Z) = Acos(Z)/Sqrt(1 - Z*Z). Computing G(Z) may be performed using the pipeline of Fig. 5. Specifically, the values for these functions may be computed using look up tables for coefficients a, b, c and interpolated as described above.

The one or both of the outputs of the InvTrig stage 602 may be processed by a post-processing stage 606 along with one or more of the outputs of the pre-processing stage 600 and the original input arguments to obtain the output 608 that approximates the inverse trigonometric function corresponding to the opcode. In particular, the computations performed by the post-processing stage 606 and the values upon which it operates for each opcode are described in Table 3. The value of 1/Pi may be pre-computed (0.31830988618379067153776752674503f) such that it does not have to be computed each time it is needed.

**Table 3: Post-Processor Stage Functions**

| Opcode | Final Result (w) |
|---|---|
| ACos(x), | w = s*Out1 + Out2 |
| ACosPi(x) | w = (s*Out1 + Out2)*(1/Pi) |
| ASin(x), | w = Out1 *x |
| ASinPi(x) | w = Out1 *x*Pi |
| ATan(y) | w = Out1 *t + Out2 |
| A TanPi(y) | w = (Out1*t + Out2)*(1/Pi) |
| ATan2(x,y), | w = Out1*t + Out2 |
| A Tan2Pi(x,y), | w = (Out1*t + Out2)*(1/Pi) |

The operation of new(x,y) will now be described. In particular new(x, y) may be used to avoid overflow, underflow, divide by zero, and other errors that may occur for some input arguments. For example, new(x, y) may produce outputs x' and y' such that the output of Atan2pi conform to the requirements of the OpenCL standard for Atan2pi:

**atan2pi** ($\pm$0, -0) = $\pm$1.

**atan2pi** ($\pm$0, +0) = $\pm$ 0.

**atan2pi** ($\pm$0, *x*) returns $\pm$ 1 for *x* < 0.

**atan2pi** ($\pm$0, *x*) returns $\pm$ 0 for *x* > 0.

**atan2pi** (*y*, $\pm$0) returns -0.5 for *y* < 0.

**atan2pi** (*y*, $\pm$0) returns 0.5 for *y* > 0.

**atan2pi** ($\pm$*y*, -∞) returns $\pm$ 1 for finite *y* > 0.

**atan2pi** ($\pm$*y*, +∞) returns $\pm$ 0 for finite *y* > 0.

**atan2pi** ($\pm$∞, *x*) returns $\pm$ 0.5 for finite *x*.

**atan2pi** ($\pm$∞, -∞) returns $\pm$0.75.

**atan2pi** ($\pm$∞, +∞) returns $\pm$0.25.

In the illustrated embodiment, the above-described outcomes are achieved by implementing new(x, y) as described below in Table 4. For example, if x = y = 2^68, if new(x, y) were not used, then u = (x*x + y*y) = 2^137, which will result in overflow (max = 2^127*1.11111...). For u = +inf, v = 0, (s, t) = (0, 0). The Final result is therefore w = 0. The correct result is 0.25. If x = y = 2^(-68), the wrong result will also result since underflow, u = 0, v = Inf, (s, t) = Inf. The final result is w = Nan. If |s| > 1.0 in G(s) calculation the output of InvTrig may be out1 = out2 = Nan.

Table 4. New(x, y) Function Definition

| Input y | Input x | Output y' | Output x' |
|---------|---------|-----------|-----------|
| Nan | x | Nan | x |
| y | Nan | y | Nan |
| ±0 | Sign(x) = 0 | ±eps (t = ±0, G(s) = 1) | 4.0 |
| ±0 | Sign(x) = 1 | ±eps (t = ±0, -G(s) = ±1) | -4.0 |
| ±y (y>denormal) | ±0 | ±4.0 (sign as Y) | Eps (eps may be 2^(-126, the smallest positive normal floating point number for fp32) |
| ±y (denormal<y<Inf) | ±Inf | ±eps | ±4.0 |
| ±Inf | ±x (denormal<x <Inf) | ±4.0 | Eps |
| ±Inf | ±Inf | ±1 | ±1 |
| nonzero x | nonzero y, \|x\| ≥ \|y\| | y' = y*2^k1 (k1 such that \|x'\| is in the range [2^40 to 2^41)) | x' = x *2^k1 (k1 such that \|x'\| is in the range [2^40 to 2^41)) |
| nonzero x | nonzero y, \|x\| <\|y\| | y' = y*2^k2 (k2 such that \|y'\| is in the range [2^40 to 2^41)) | x' = x *2^k2 (k2 such that \|y'\| is in the range [2^40 to 2^41)) |

The above-described apparatus and method provides a two input and two output function (pre-processing stage 600 and InvTrig stage 602) that can perform all of Asin, Acos, Atan, and Atan2 with a few instructions.

Foregoing described embodiments of the invention are provided as illustrations and descriptions. They are not intended to limit the invention to precise form described. In particular, it is contemplated that networks may be wired, wireless, or a combination of wired and wireless. Other variations and embodiments are possible in light of above teachings, and it is thus intended that the scope of invention not be limited by this Detailed Description, but rather by Claims following.

The described embodiments are to be considered in all respects only as illustrative, and not restrictive. The scope of the invention is, therefore, indicated by the appended claims, rather than by the foregoing description. All changes which come within the meaning and range of equivalency of the claims are to be embraced within their scope.

According to an embodiment, mathematical functions are computed in a single pipeline performing a polynomial approximation (e.g. a quadratic approximation, or the like) using data tables for RCP, SQRT, RSQRT, EXP or LOG using a single pipeline according to opcodes. SIN and COS are also computed using the pipeline according to the approximation $((-1)$^$IntX)*Sin(\pi*Min(FracX, 1.0 - FracX)/Min(FracX, 1.0 - FracX)$. A pipline portion approximates $Sin(\pi*FracX)$ using tables and interpolation and a subsequent stage multiplies this approximation by FracX. For input arguments of x close to 1.0. LOG2(x-1)/(x-1) is computed using a first pipeline portion using tables and interpolation and subsequently multiplied by (x-1). A DIV operation may also be performed with input arguments scaled up to avoid underflow as needed. Inverse trigonometric functions may be calculated using a pre-processing stage and post processing stage in order to obtain multiple inverse trigonometric functions from a single pipeline.

## Claims

1.   An apparatus for computing mathematical functions, the apparatus comprising:

a pre-processing hardware stage (600) configured to take as inputs an opcode corresponding to Asin, Acos, Atan or Atan2 and one or two input arguments (x; (x,y)) and to produce one or more pre-processing output arguments (s; (s,t) ; (v,s,t)) according to the one or two input arguments (x; (x,y)) and the opcode when the opcode corresponds to Asin, Atan, or Atan2 and to produce one pre-processing output argument (s) according to one of the one or two input arguments (x) and the opcode when the opcode corresponds to Acos;

an inverse function hardware stage (602) configured to calculate a value G(Z) = Acos(Z)/Sqrt(1-Z*Z) for opcodes corresponding to all of Asin, Acos, Atan, and Atan2, where Z is one of the pre-processing output arguments (s) if the opcode corresponds to Asin, Atan or Atan2 and where Z is the absolute value of one of the one or two input arguments (|x|) if the opcode corresponds to Acos, and to generate one or two inverse function output arguments (Out1; (Out1,Out2)), where G(Z) is used to generate the first inverse function output argument (Out1)); and

a post-processing hardware stage (606) configured to obtain the final result from the first inverse function output argument (Out1) and at least one of the one or two input arguments (x), one of the pre-processing output arguments (s;t) and the second inverse function output argument (Out2) depending on the opcode;

wherein the pre-processing, inverse function, and post-processing hardware stages (600, 602, 606) are configured to produce final results corresponding to Asin, Acos, Atan, and Atan2 according to the opcode.

2. The apparatus of claim 1, wherein the inverse function hardware stage (602) is configured to calculate G(Z) from one or more look up tables.

3. The apparatus of claim 2, wherein the inverse function hardware stage (602) is configured to calculate G(Z) from the one or more look up tables by performing a polynomial approximation using values from the one or more look up tables.

4. The apparatus of claim 3, wherein the inverse function hardware stage (602) is configured to perform the polynomial approximation by computing a polynomial using values of (Z-Z0) and (Z-Z1), where the one or more look up tables include values corresponding to Z0, Z0 less than Z, and values corresponding to Z1, Z1 greater than Z.

5. The apparatus of claim 4, wherein inverse function hardware stage (602) is configured to calculate (Z - Z1) as NOT(Z-Z0); and/or wherein the inverse function hardware stage (602) is configured to perform the polynomial approximation by further computing a polynomial using a value of (Z - Z0)*(Z-Z1).

6. The apparatus of claim 5, wherein the inverse function hardware stage (602) is configured to perform the polynomial approximation by calculating G(Z) = a + b*(Z-Z0) + c*(Z-Z0)*(Z-Z1), where values a, b, and c depend on the values Z0 and Z1 and are retrieved from the one or more look up tables.

7. The apparatus of claim 1, wherein:

the pre-processing hardware stage (600) is configured to calculate the output arguments according to the one or two input arguments in accordance with the following table:

| Opcode | Input Argument(s) | Output Argument(s) |
|---|---|---|
| ACos(x), ACosPi(x) | x, don't care | u = 1 - x*x (use Fma)<br>s = Sqrt(u) |
| ASin(x), ASinPi(x) | x, don't care | u = 1 - x*x (use Fma)<br>s = Sqrt(u) |
| ATan(x) A TanPi(x), | x, don't care | u = 1 + x*x (use Fma)<br>s = Rsqrt(u)<br>t = s*x |
| A Tan2(x,y), A Tan2Pi(x,y), Input (s, t) | x, y | (x', y') = new(x, y)<br>u = x'*x' + y'*y' (use Dp2)<br>v = Rsqrt(u)<br>s = x'*v<br>t = y'*v |

; and

| Input y | Input x | Output y' | Output x' |
|---|---|---|---|
| Nan | x | Nan | x |
| y | Nan | y | Nan |
| ±0 | Sign(x) = 0 | ±eps (t = ±0, G(s) = 1) | 4.0 |
| ±0 | Sign(x) = 1 | ±eps (t = ±0, -G(s) = ±1) | -4.0 |
| ±y (y>denormal) | ±0 | ±4.0 (sign as Y) | Eps (eps may be 2^(-126, the smallest positive normal floating point number for fp32) |
| ±y (denormal<y<Inf) | ±Inf | ±eps | ±4.0 |
| ±Inf | ±x (denormal<x <Inf) | ±4.0 | Eps |
| ±Inf | ±Inf | ±1 | ± 1 |
| nonzero x | nonzero y, \|x\| ≥ \|y\| | y' = y * 2^k1 (k1 such that \|x'\| is in the range [2^40 to 2^41)) | x' = x *2^k1 (k1 such that \|x'\| is in the range [2^40 to 2^41)) |
| nonzero x | nonzero y, \|x\| <\|y\| | y' = y *2^k2 (k2 such that \|y'\| is in the range [2^40 to 2^41)) | x' = x *2^k2 (k2 such that \|y'\| is in the range [2^40 to 2^41)) |

and/or
wherein the inverse function hardware stage (602) is configured to calculate G(Z) in accordance with the following table:

| Opcode | Out1 | Out2 |
|---|---|---|
| ACos(x), ACosPi(x) | G(\|x\|)*Sign(x) | x ≥ 0 ? 0 : π |
| ASin(x), ASinPi(x) | G(s) | Not Used |
| ATan(x) ATanPi(x), | s < 2^(-40) ? 0 : G(s) | s < 2^(-40) ? Sign(x)*π/2 : 0 |
| ATan2(x,y), A Tan2Pi(x,y), Input (s, t) | G(s)*(Sign(s)) (Sign(x) = Sign(s)) | x ≥ 0 ? 0 : Sign(t)*π (Sign(y) = Sign(t)) |

8. The apparatus of any one of the preceding claims, wherein the post-processing hardware stage (606) is configured to perform computations in accordance with the following table:

| Opcode | Final Result (w) |
|---|---|
| ACos(x), | w = s*Out1 + Out2 |
| ACosPi(x) | w = (s*Out1 + Out2)*(1/Pi) |
| ASin(x), | w = Out1 *x |
| ASinPi(x) | w = Out1 *x*Pi |
| ATan(y) | w = Out1*t + Out2 |
| ATanPi(y) | w = (Out1*t + Out2)*(1/Pi) |
| ATan2(x,y), | w = Out1 *t + Out2 |
| A Tan2Pi(x,y), | w = (Out1*t + Out2)*(1/Pi) |

9. A method for computing mathematical functions, the method comprising:

receiving, by a pre-processing hardware stage (600), an opcode corresponding to Asin, Acos, Atan or Atan2 and one or two input arguments (x; (x,y)); by the pre-processing hardware stage (600), generating one or more pre-processing output arguments (s; (s,t); (v,s,t)) according to the one or two input arguments (x;(x,y)) and the opcode when the opcode corresponds to Asin, Atan or Atan2, and generating one pre-processing output argument (s) according to one of the one or two input arguments (x) and the opcode when the opcode corresponds to Acos;

by an inverse function hardware stage (602), calculating a value $G(Z)=Acos(Z)/Sqrt(1-Z*Z)$ for opcodes corresponding to all of Asin, Acos, Atan, and Atan2, where Z is one of the pre-processing output arguments (s) if the opcode corresponds to Asin, Atan or Atan2 and where Z is the absolute value of one of the one or two input arguments (|x|) if the opcode corresponds to Acos and generating one or two inverse function output arguments (Out1; (Out1,Out2)), where G(Z) is used to generate the first inverse function output argument (Out1);

by a post-processing hardware stage (606), obtaining the final result from the first inverse function output argument (Out1) and at least one of the one or two input arguments (x), one of the pre-processing output arguments (s; t) and the second inverse function output argument (Out2) depending on the opcode;

wherein the pre-processing, inverse function, and post-processing hardware stages (600, 602, 606) are configured to produce final results corresponding to Asin, Acos, Atan, and Atan2 according to the opcode.

10. The method of claim 9, further comprising calculating, by the inverse function hardware stage (602), G(Z) from one or more look up tables.

11. The method of claim 9, further comprising calculating, by the inverse function hardware stage (602), G(Z) from the one or more look up tables by performing a polynomial approximation using values from the one or more look up tables.

12. The method of claim 11, further comprising calculating, by the inverse function hardware stage (602), the polynomial approximation by computing a polynomial using values of (Z-ZO) and (Z-Z1), where the one or more look up tables include values corresponding to Z0, Z0 less than Z, and values corresponding to Z1, Z1 greater than Z.

13. The method of claim 12, further comprising calculating, by the inverse function hardware stage (602), (Z - Z1) as NOT(Z-Z0); and/or further comprising calculating, by the inverse function hardware stage, the polynomial approximation using a value of (Z - Z0)*(Z-Z1).

14. The method of claim 13, further comprising calculating, by the inverse function hardware stage (602), the polynomial approximation by calculating $G(Z) = a + b*(Z-Z0) + c*(Z-Z0)*(Z-Z1)$, where values a, b, and c depend on the values Z0 and Z1 and are retrieved from the one or more look up tables.

15. The method of claim 9, further comprising calculating, by the pre-processing hardware stage (600), the output arguments according to the input arguments in accordance with the following tables:

| Opcode | Input Argument(s) | Output Argument(s) |
|---|---|---|
| ACos(x), ACosPi(x) | x, don't care | u = 1 - x*x (use Fma)<br>s = Sqrt(u) |
| ASin(x), ASinPi(x) | x, don't care | u = 1 - x*x (use Fma)<br>s = Sqrt(u) |
| A Tan(x) A TanPi(x), | x, don't care | u = 1 + x*x (use Fma)<br>s = Rsqrt(u)<br>t = s*x |
| ATan2(x,y), ATan2Pi(x,y), Input (s, t) | x, y | (x', y') = new(x, y)<br>u = x'*x' + y'*y' (use Dp2)<br>v = Rsqrt(u)<br>s = x'*v<br>t = y'*v |

and

| Input y | Input x | Output y' | Output x' |
|---|---|---|---|
| Nan | x | Nan | x |
| y | Nan | y | Nan |
| $\pm 0$ | Sign(x) = 0 | $\pm$eps (t = $\pm 0$, G(s) = 1) | 4.0 |
| $\pm 0$ | Sign(x) = 1 | $\pm$eps (t = $\pm 0$, -G(s) = $\pm 1$) | -4.0 |
| $\pm y$ (y>denormal) | $\pm 0$ | $\pm 4.0$ (sign as Y) | Eps (eps may be $2^{-126}$, the smallest positive normal floating point number for fp32) |
| $\pm y$ (denormal<y<Inf) | $\pm$Inf | $\pm$eps | $\pm 4.0$ |
| $\pm$Inf | $\pm x$ (denormal<x <Inf) | $\pm 4.0$ | Eps |
| $\pm$Inf | $\pm$Inf | $\pm 1$ | $\pm 1$ |
| nonzero x | nonzero y, $|x| \geq |y|$ | $y' = y * 2^{k1}$ (k1 such that $|x'|$ is in the range [$2^{40}$ to $2^{41}$)) | $x' = x * 2^{k1}$ (k1 such that $|x'|$ is in the range [$2^{40}$ to $2^{41}$)) |
| nonzero x | nonzero y, $|x| < |y|$ | $y' = y * 2^{k2}$ (k2 such that $|y'|$ is in the range [$2^{40}$ to $2^{41}$)) | $x' = x * 2^{k2}$ (k2 such that $|y'|$ is in the range [$2^{40}$ to $2^{41}$)) |

and/or
further comprising calculating, by the inverse function hardware stage (602), G(Z) in accordance with the following table:

| Opcode | Out1 | Out2 |
|---|---|---|
| ACos(x), ACosPi(x) | G($|x|$)*Sign(x) | $x \geq 0$ ? 0 : $\pi$ |
| ASin(x), ASinPi(x) | G(s) | Not Used |
| A Tan(x) ATanPi(x), | $s < 2^{-40}$ ? 0 : G(s) | $s < 2^{-40}$ ? Sign(x)*$\pi$/2 : 0 |
| ATan2(x,y), ATan2Pi(x,y), Input (s, t) | G(s)*(Sign(s)) (Sign(x) = Sign(s)) | $x \geq 0$ ? 0 : Sign(t)*$\pi$ (Sign(y) = Sign(t)) |

and/or
wherein the final result corresponds to one of Asin, Acos, Atan, and Atan2 according to the opcode.

16. The method of any one of the preceding claims 9 to 15, wherein the processing, by a post-processing hardware stage (606), performs computations in accordance with the following table:

| Opcode | Final Result (w) |
|---|---|
| ACos(x), | w = s*Out1 + Out2 |
| ACosPi(x) | w = (s*Out1 + Out2)*(1/Pi) |
| ASin(x), | w = Out1 *x |
| ASinPi(x) | w = Out1 *x*Pi |
| ATan(y) | w = Out1 *t + Out2 |

(continued)

| Opcode | Final Result (w) |
|---|---|
| A TanPi(y) | w = (Out1*t + Out2)*(1/Pi) |
| ATan2(x,y), | w = Out1 *t + Out2 |
| A Tan2Pi(x,y), | w = (Out1*t + Out2)*(1/Pi) |

**Patentansprüche**

1. Vorrichtung zum Berechnen mathematischer Funktionen, wobei die Vorrichtung aufweist:

   eine Vorverarbeitungs-Hardwareplattform (600), die konfiguriert ist, einen Opcode, der Asin, Acos, Atan oder Atan2 entspricht, und ein oder zwei Eingabeargumente (x; (x, y)) als Eingaben zu nehmen und ein oder mehrere Vorverarbeitungs-Ausgabeargumente (s; (s, t); (v, s, t)) gemäß dem einen oder den zwei Eingabeargumenten (x; (x, y)) und dem Opcode, wenn der Opcode Asin, Atan oder Atan2 entspricht, zu erzeugen, und ein Vorverarbeitungs-Ausgabeargument (s) gemäß dem einen oder den zwei Eingabeargumenten (x) oder gemäß dem Opcode zu erzeugen, wenn der Opcode Acos entspricht;
   eine Hardwareplattform der inversen Funktion (602), die konfiguriert ist, einen Wert G (Z) = Acos (Z) / Sqrt (1 - Z * Z) für Opcodes entsprechend Asin, Acos, Atan und Atan2 zu berechnen, wobei Z eines der Vorverarbeitungs-Ausgabeargumente (s) ist, wenn der Opcode Asin, Atan oder Atan2 entspricht, und wobei Z der absolute Wert eines des einen oder der zwei Eingabeargumente (|x|) ist, wenn der Opcode Acos entspricht, und ein oder zwei Ausgabeargumente der inversen Funktion (Out1; (Out1, Out2)) zu erzeugen, wobei G(Z) verwendet wird, um das erste Ausgabeargument der inversen Funktion (Out1) zu erzeugen; und
   eine Nachverarbeitungs-Hardwareplattform (606), die konfiguriert ist, das Endergebnis aus dem ersten Ausgabeargument der inversen Funktion (Out1) und aus zumindest einem des einen oder der zwei Eingabeargumente (x), einem der Vorverarbeitungs-Ausgabeargumente (s; t) und dem zweiten Ausgabeargument der inversen Funktion (Out2) gemäß dem Opcode zu erhalten;
   wobei die Vorverarbeitungs-Hardwareplattform, die Hardwareplatform der inversen Funktion und die Nachverarbeitungs-Hardwareplatform (600, 602, 606) konfiguriert sind, Endergebnisse entsprechend Asin, Acos, Atan und Atan2 gemäß dem Opcode zu erzeugen.

2. Vorrichtung nach Anspruch 1, wobei die Hardwareplattform der inversen Funktion (602) konfiguriert ist, G(Z) aus einer oder aus mehreren Nachschlagtabellen zu berechnen.

3. Vorrichtung nach Anspruch 2, wobei die Hardwareplattform der inversen Funktion (602) konfiguriert ist, G(Z) aus der einen oder aus den mehreren Nachschlagtabellen durch ein Ausführen einer polynomialen Annäherung unter Verwendung von Werten aus der einen oder aus den mehreren Nachschlagtabellen zu berechnen.

4. Vorrichtung nach Anspruch 3, wobei die Hardwareplattform der inversen Funktion (602) konfiguriert ist, die polynomiale Annäherung durch ein Berechnen eines Polynomials unter Verwendung von Werten (Z - ZO) und (Z - Z1) auszuführen, wobei die eine oder die mehreren Nachschlagtabellen Werte umfassen, die Z0 entsprechen, wobei Z0 kleiner als Z ist, und Werte umfassen, die Z1 entsprechen, wobei Z1 größer als Z ist.

5. Vorrichtung nach Anspruch 4, wobei die Hardwareplattform der inversen Funktion (602) konfiguriert ist, (Z - Z1) als NOT(Z - ZO) zu berechnen; und/oder
   wobei die Hardwareplattform der inversen Funktion (602) konfiguriert ist, die polynomiale Annäherung ferner durch ein Berechnen eines Polynomials unter Verwendung eines Werts von (Z - Z0) * (Z - Z1) auszuführen.

6. Vorrichtung nach Anspruch 5, wobei die Hardwareplattform der inversen Funktion (602) konfiguriert ist, die polynomiale Annäherung durch ein Berechnen von G(Z) = a + b * (Z - Z0) + c * (Z - Z0) * (Z - Z1) auszuführen, wobei die Werte a, b und c von den Werten Z0 und Z1 abhängig sind und aus der einen oder aus den mehreren Nachschlagtabellen erhalten werden.

7. Vorrichtung nach Anspruch 1, wobei:

die Vorverarbeitungs-Hardwareplattform (600) konfiguriert ist, die Ausgabeargumente gemäß dem einen oder den zwei Eingabeargumenten in Übereinstimmung mit der folgenden Tabelle zu berechnen:

| Opcode | Eingabeargument(e) | Ausgabeargument(e) |
|---|---|---|
| ACos(x), ACosPi(x) | x, "don't care" | u = 1 - x *x (benutze Fma)<br>s = Sqrt(u) |
| ASin(x), ASinPi(x) | x, "don't care" | u = 1 - x * x (benutze Fma)<br>s = Sqrt(u) |
| ATan(x), ATanPi(x) | x, "don't care" | u = 1 + x * x (benutze Fma)<br>s = Rsqrt(u)<br>t = s * |
| ATan2(x, y) ATan2Pi(x, y), Input(s, t) | x, y | (x', y') = new(x ,y)<br>u = x' * x' + y' * y' (benutze Dp2)<br>v = Rsqrt(u)<br>s = x' * v<br>t = y' * v |

und

| Eingabe y | Eingabe x | Ausgabe y' | Ausgabe x' |
|---|---|---|---|
| Nan | x | Nan | x |
| y | Nan | y | Nan |
| ±0 | Sign(x) = 0 | ±eps (t = ±0, G(s) = 1) | 4.0 |
| ±0 | Sign(x) = 1 | ±eps (t = ±0, -G(s) = ±1) | -4.0 |
| ±y (y > denormal) | ±0 | ±4.0 (Vorzeichen wie bei Y) | Eps (eps kann 2^(-126) sein, die kleinste positive normale Gleitkommazahl für fp32) |
| ±y (denormal < y < Inf) | ±Inf | ±eps | ±4.0 |
| ±Inf | ±x (denormal < x < Inf) | ±4.0 | Eps |
| ±Inf | ±Inf | ±1 | ±1 |
| x, der ungleich Null ist | y, der ungleich Null ist, $|x| \geq |y|$ | y' = y * 2^k1 (k1 ist so, dass |x'| im Bereich [2^40 bis 2^41] ist) | x' = x * 2^k1 (k1 ist so, dass |x'l im Bereich [2^40 bis 2^41] ist) |
| x, der ungleich Null ist | Y, der ungleich Null ist, $|x| < |y|$ | y' = y * 2^k2 (k2 ist so, dass |y'| im Bereich [2^40 bis 2^41] ist) | x' = x * 2^k2 (k2 ist so, dass |y'| im Bereich [2^40 bis 2^41] ist) |

und/oder

wobei die Hardwareplattform der inversen Funktion (602) konfiguriert ist, G(Z) gemäß der folgenden Tabelle zu berechnen:

| Opcode | Out1/Ausgabe 1 | Out2/Ausgabe 2 |
|---|---|---|
| ACos(x), ACosPi(x) | G(|x|) * Sign(x) | $x \geq 0$ ? $0 : \pi$ |
| ASin(x), ASinPi(x) | G(s) | Nicht verwendet |

(fortgesetzt)

| Opcode | Out1/Ausgabe 1 | Out2/Ausgabe 2 |
|---|---|---|
| ATan(x), ATanPi(x) | $s < 2^{(-40)}$ ? 0 : G(s) | $s < 2^{(-40)}$ ? Sign(x) * $\pi$/2 : 0 |
| ATan2(x, y), ATan2Pi(x, y), Input(s, t) | G(s) * (Sign(s)) (Sign(x) = Sign(s)) | $x \geq 0$ ? 0: Sign(t)*$\pi$ (Sign(y) = Sign(t)) |

8. Vorrichtung nach einem der vorstehenden Ansprüche, wobei die Nachverarbeitungs-Hardwareplattform (606) konfiguriert ist, Berechnungen gemäß der folgenden Tabelle auszuführen:

| Opcode | Endergebnis (w) |
|---|---|
| ACos(x) | w = s * Out1 + Out2 |
| ACosPi(x) | w = (s * Out1 + Out2) * (1/(Pi) |
| ASin(x) | w = Out1 * x |
| ASinPi(x) | w = Out1 * x * Pi |
| ATan(y) | w = Out1 * t + Out2 |
| ATanPi(y) | w = (Out1 * t + Out2) * (1/Pi) |
| ATan2(x, y) | w = Out1 * t + Out2 |
| ATan2Pi(x ,y) | w = (Out1 * t + Out2) * (1/Pi) |

9. Verfahren zum Berechnen mathematischer Funktionen, wobei das Verfahren aufweist:

Empfangen, durch eine Vorverarbeitungs-Hardwareplattform (600), eines Opcode, der Asin, Acos, Atan oder Atan2 entspricht, und eines oder zweier Eingabeargumente (x; (x, y));
durch die Vorverarbeitungs-Hardwareplattform (600), Erzeugen eines oder mehrerer Vorverarbeitungs-Ausgabeargumente (s; (s, t); (v, s, t)) gemäß dem einen oder den zwei Eingabeargumenten (x; (x, y)) und dem Opcode, wenn der Opcode Asin, Atan oder Atan2 entspricht, und Erzeugen eines Vorverarbeitungs-Ausgabearguments (s) gemäß dem einen oder den zwei Eingabeargumenten (x) oder gemäß dem Opcode, wenn der Opcode Acos entspricht;
durch eine Hardwareplatform der inversen Funktion (602), Berechnen eines Werts G (Z) = Acos (Z) / Sqrt (1 - Z * Z) für Opcodes entsprechend Asin, Acos, Atan und Atan2, wobei Z eines der Vorverarbeitungs-Ausgabeargumente (s) ist, wenn der Opcode Asin, Atan oder Atan2 entspricht, und wobei Z der absolute Wert eines des einen oder der zwei Eingabeargumente (|x|) ist, wenn der Opcode Acos entspricht, und Erzeugen eines oder zweier Ausgabeargumente der inversen Funktion (Out1; (Out1, Out2)), wobei G(Z) verwendet wird, um das erste Ausgabeargument der inversen Funktion (Out1) zu erzeugen;
durch eine Nachverarbeitungs-Hardwareplattform (606), Erhalten des Endergebnisses aus dem ersten Ausgabeargument der inversen Funktion (Out1) und aus zumindest einem des einen oder zwei Eingabeargumente (x), einem der Vorverarbeitungs-Ausgabeargumente (s; t) und dem zweiten Ausgabeargument der inversen Funktion (Out2) gemäß dem Opcode;
wobei die Vorverarbeitungs-Hardwareplattform, die Hardwareplatform der inversen Funktion und die Nachverarbeitungs-Hardwareplattform (600, 602, 606) konfiguriert sind, Endergebnisse entsprechend Asin, Acos, Atan und Atan2 gemäß dem Opcode zu erzeugen.

10. Verfahren nach Anspruch 9, das ferner ein Berechnen von G(z) aus einer oder mehreren Nachschlagtabellen durch die Hardwareplattform der inversen Funktion (602) aufweist.

11. Verfahren nach Anspruch 9, das ferner ein Berechnen, durch die Hardwareplattform der inversen Funktion (602), von G(z) aus der einen oder aus den mehreren Nachschlagtabellen durch Ausführen einer polynomialen Annäherung unter Verwendung von Werten aus der einen oder aus den mehreren Nachschlagtabellen aufweist.

12. Verfahren nach Anspruch 11, das ferner ein Berechnen, durch die Hardwareplattform der inversen Funktion (602), der polynomialen Annäherung durch ein Berechnen eines Polynomials unter Verwendung von Werten (Z - ZO) und (Z - Z1) aufweist, wobei die eine oder die mehreren Nachschlagtabellen Werte umfassen, die Z0 entsprechen, wobei Z0 kleiner als Z ist, und Werte umfassen, die Z1 entsprechen, wobei Z1 größer als Z ist.

**13.** Verfahren nach Anspruch 12, das ferner ein Berechnen, durch die Hardwareplattform der inversen Funktion (602), von (Z - Z1) als NOT(Z - Z0) aufweist; und/oder
wobei das Verfahren ferner ein Berechnen, durch die Hardwareplattform der inversen Funktion, der polynomialen Annäherung unter Verwendung eines Werts von (Z - Z0) * (Z - Z1) aufweist.

**14.** Verfahren nach Anspruch 13, das ferner ein Berechnen, durch die Hardwareplattform der inversen Funktion (602), der polynomialen Annäherung durch ein Berechnen von G(Z) = a + b * (Z - Z0) + c * (Z - Z0) * (Z - Z1) aufweist, wobei die Werte a, b und c von den Werten Z0 und Z1 abhängig sind und aus der einen oder aus den mehreren Nachschlagtabellen erhalten werden.

**15.** Verfahren nach Anspruch 9, das ferner ein Berechnen, durch die Vorverarbeitungs-Hardwareplattform (600), der Ausgabeargumente gemäß der Eingabeargumente in Übereinstimmung mit der folgenden Tabelle aufweist:

| Opcode | Eingabeargument(e) | Ausgabeargument(e) |
|---|---|---|
| ACos(x), ACosPi(x) | x, "don't care" | u = 1 - x * x (benutze Fma) <br> s = Sqrt(u) |
| ASin(x), ASinPi(x) | x, "don't care" | u = 1 - x * x (benutze Fma) <br> s = Sqrt(u) |
| ATan(x), ATanPi(x) | x, "don't care" | u = 1 + x * x (benutze Fma) <br> s = Rsqrt(u) <br> t = s * x |
| ATan2(x, y) ATan2Pi(x, y), Input(s, t) | x, y | (x',y') = new(x, y) <br> u = x' * x' + y' * y' (benutze Dp2) <br> v = Rsqrt(u) <br> s = x' * v <br> t = y' * v |

und

| Eingabe y | Eingabe x | Ausgabe y' | Ausgabe x' |
|---|---|---|---|
| Nan | x | Nan | x |
| y | Nan | y | Nan |
| ±0 | Sign(x) = 0 | ±eps (t = ±0, G(s) = 1) | 4.0 |
| ±0 | Sign(x) = 1 | ±eps (t = ±0, -G(s) = ±1) | -4.0 |
| ±y (y > denormal) | ±0 | ±4.0 (Vorzeichen wie bei Y) | Eps (eps kann 2^(-126) sein, die kleinste positive normale Gleitkommazahl für fp32) |
| ±y (denormal < y < Inf) | ±Inf | ±eps | ±4.0 |
| ±Inf | ±x (denormal < x < Inf) | ±4.0 | Eps |
| ±Inf | ±Inf | ±1 | ±1 |
| x, der ungleich Null ist | y, der ungleich Null ist, \|x\| ≥ \|y\| | y' = y * 2^k1 (k1 ist so, dass \|x'\| im Bereich [2^40 bis 2^41] ist) | x' = x * 2^k1 (k1 ist so, dass \|x'\| im Bereich [2^40 bis 2^41] ist) |

(fortgesetzt)

| Eingabe y | Eingabe x | Ausgabe y' | Ausgabe x' |
|---|---|---|---|
| x, der ungleich Null ist | y, der ungleich Null ist, \|x\| < \|y\| | y' = y * 2^k2 (k2 ist so, dass \|y'\| im Bereich [2^40 bis 2^41] ist) | x' = x * 2^k2 (k2 ist so, dass \|y'\| im Bereich [2^40 bis 2^41] ist) |

und/oder

wobei das Verfahren ferner ein Berechnen, durch die Hardwareplattform der inversen Funktion (602), von G(Z) gemäß der folgenden Tabelle aufweist:

| Opcode | Out1/Ausgabe 1 | Out2/Ausgabe 2 |
|---|---|---|
| ACos(x), ACosPi(x) | G(\|x\|) * Sign(x) | x ≥ 0 ? 0 : π |
| ASin(x), ASinPi(x) | G(s) | Nicht verwendet |
| ATan(x), ATanPi(x) | s < 2^(-40) ? 0: G(s) | s < 2^(-40) ? Sign(x) * π/2 : 0 |
| ATan2(x, y), ATan2Pi(x, y), Input(s, t) | G(s) * (Sign(s)) (Sign(x) = Sign(s)) | x ≥ 0 ? 0: Sign(t)*π (Sign(y) = Sign(t)) |

und/oder

wobei das Endergebnis Asin, Acos, Atan oder Atan2 gemäß dem Opcode entspricht.

16. Verfahren nach einem der vorstehenden Ansprüche 9 to 15, wobei das Verarbeiten, durch eine Nachverarbeitungs-Hardwareplattform (606), Berechnungen gemäß der folgenden Tabelle ausführt:

| Opcode | Endergebnis (w) |
|---|---|
| ACos(x) | w = s * Out1 + Out2 |
| ACosPi(x) | w = (s * Out1 + Out2) * (1/(Pi) |
| ASin(x) | w = Out1 * x |
| ASinPi(x) | w = Out1 * x * Pi |
| ATan(y) | w = Out1 * t + Out2 |
| ATanPi(y) | w = (Out1 * t + Out2) * (1/Pi) |
| ATan2(x, y) | w = Out1 * t + Out2 |
| ATan2Pi(x, y) | w = (Out1 * t + Out2) * (1/Pi) |

**Revendications**

1. Un appareil pour calculer des fonctions mathématiques, l'appareil comprenant :

un étage matériel de prétraitement (600) configuré pour prendre en tant qu'entrées un code d'opération, ou opcode, correspondant à Asin, Acos, Atan ou Atan2 et
un ou deux arguments d'entrée (x ; (x,y)) et pour produire un ou plusieurs arguments de sortie de prétraitement (s ; (s,t) ; (v,s,t)) selon lesdits un ou deux arguments d'entrée (x ; (x,y)) et l'opcode lorsque l'opcode correspond à Asin, Atan, ou Atan2 et pour en produire un argument (s) de sortie de prétraitement selon l'un desdits un ou deux arguments d'entrée (x) et l'opcode lorsque l'opcode correspond à Acos ;
un étage matériel de fonction inverse (602) configuré pour calculer une valeur G(Z) = Acos(Z)/Sqrt (1-Z*Z) pour les opcodes correspondant à tous parmi les Asin, Acos, Atan et Atan2, où Z est l'un des arguments (s) de sortie de prétraitement si l'opcode correspond à Asin, Atan ou Atan2, et où Z est la valeur absolue de l'un desdits un ou deux arguments d'entrée (\|x\|) si l'opcode correspond à Acos, et pour générer un ou deux arguments de sortie de fonction inverse (Out1 ; (Out1, Out2)), G(Z) étant utilisé pour générer le premier argument de sortie de fonction inverse (Out1) ; et

un étage matériel de post-traitement (606) configuré pour obtenir le résultat final à partir du premier argument de sortie de fonction inverse (Out1) et au moins un des un ou deux arguments d'entrée (x), l'un des arguments de sortie de prétraitement (s ; t) et le deuxième argument de sortie de fonction inverse (Out2) selon l'opcode ; les étages matériels de prétraitement, de fonction inverse et de post-traitement (600, 602, 606) étant configurés pour produire des résultats finaux correspondant à Asin, Acos, Atan et Atan2 selon l'opcode.

2. L'appareil selon la revendication 1, dans lequel l'étage matériel de fonction inverse (602) est configuré pour calculer G(Z) à partir d'une ou plusieurs tables de recherche.

3. L'appareil selon la revendication 2, dans lequel l'étage matériel de fonction inverse (602) est configuré pour calculer G(Z) à partir desdites une ou plusieurs tables de recherche en effectuant une approximation polynomiale en utilisant des valeurs provenant desdites une ou plusieurs tables de recherche.

4. L'appareil selon la revendication 3, dans lequel l'étage matériel de fonction inverse (602) est configuré pour effectuer l'approximation polynomiale en calculant un polynôme en utilisant les valeurs de (Z-ZO) et (Z-Z1), lesdites une ou plusieurs tables de recherche incluant des valeurs correspondant à Z0, Z0 étant inférieur à Z et des valeurs correspondant à Z1, Z1 étant supérieur à Z.

5. L'appareil selon la revendication 4, dans lequel l'étage matériel de fonction inverse (602) est configuré pour calculer (Z - Z1) en tant que NOT(Z-Z0) ; et/ou

dans lequel l'étage matériel de fonction inverse (602) est configuré pour effectuer l'approximation polynomiale en calculant en outre un polynôme en utilisant une valeur de (Z - Z0)*(Z-Z1).

6. L'appareil selon la revendication 5, dans lequel l'étage matériel de fonction inverse (602) est configuré pour effectuer l'approximation polynomiale en calculant G(Z) = a + b*(Z-Z0) + c*(Z-Z0)*(Z-Z1), les valeurs a, b et c étant dépendantes des valeurs Z0 et Z1 et étant extraites desdites une ou plusieurs tables de recherche.

7. L'appareil selon la revendication 1, dans lequel :

l'étage matériel de prétraitement (600) est configuré pour calculer les arguments de sortie en fonction desdits un ou deux arguments d'entrée conformément au tableau suivant :

| Opcode | Argument(s) d'entrée | Argument(s) de sortie |
|---|---|---|
| ACos(x), | x, ne pas tenir compte | u = 1 - x*x (utiliser Fma) |
| ACosPi(x) | | s = Sqrt(u) |
| ASin(x), ASinPi(x) | x, ne pas tenir compte | u = 1 -x*x (utiliser Fma) <br> s = Sqrt(u) |
| ATan(x) ATanPi(x), | x, ne pas tenir compte | u = 1 + x*x (utiliser Fma) <br> s = Rsqrt(u) <br> t = s*x |
| ATan2(x,y), ATan2Pi(x,y), Entrée (s,t) | x, y | (x', y') = new(x,y) <br> u = x'*x' + y'*y' (utiliser Dp2) <br> v = Rsqrt(u) <br> s = x'*v <br> t = y'*v |

; et

| Entrée y | Entrée x | Sortie y' | Sortie x' |
|---|---|---|---|
| Nan | x | Nan | x |
| y | Nan | y | Nan |

(suite)

| Entrée y | Entrée x | Sortie y' | Sortie x' |
|---|---|---|---|
| ±0 | Signe(x) = 0 | ±eps (t = ±0, G(s) = 1) | 4.0 |
| ±0 | Signe(x) = 1 | ±eps (t = ±0, G(s) = ±1) | -4.0 |
| ±y (y> denormal) | ±0 | ±4.0 (signe comme Y) | Eps (eps peut être 2^(-126, le plus petit nombre flottant normal positif pour fp32) |
| ±y (denormal <y<Inf) | ±Inf | ±ep s | ±4.0 |
| ±Inf | ±x (denormal <x<Inf) | ±4.0 | Eps |
| ±Inf | ±Inf | ±1 | ±1 |
| x non nul | y non nul, \|x\| ≥ \|y\| | y' = y * 2^k1 (k1 tel que \|x'\| est dans l'intervalle allant de [2^40 à 2^41)) | x' = x * 2^k1 (k1 tel que \|x'\| est dans l'intervalle allant de [2^40 à 2^41)) |
| x non nul | y non nul, \|x\| < \|y\| | y' = y * 2^k2 (k2 tel que \|y'\| est dans l'intervalle allant de [2^40 à 2^41)) | x' = x * 2^k2 (k2 tel que \|y'\| est dans l'intervalle allant de [2^40 à 2^41)) |

et/ou

l'étage matériel de fonction inverse (602) est configuré pour calculer G(Z) conformément au tableau suivant :

| Opcode | Out1 | Out2 |
|---|---|---|
| ACos(x), ACosPi(x) | G(\|x\|)*Signe(x) | X ≥ 0 ? 0 : π |
| ASin(x), ASinPi(x) | G(s) | Non utilisé |
| ATan(x) ATanPi(x), | s < 2^(-40) ? 0 : G(s) | s < 2^(-40) ? Signe(x)*π/2 : 0 |
| ATan2(x,y), ATan2Pi(x,y), Entrée (s,t) | G(s)*(Signe(s)) (Signe(x) = Signe(s)) | X ≥ 0 ? 0 : Signe(t)* π (Signe(y) = Signe(t)) |

8. L'appareil selon l'une quelconque des revendications précédentes, dans lequel l'étage matériel de post-traitement (606) est configuré pour effectuer des calculs conformément au tableau suivant :

| Opcode | Résultat final (w) |
|---|---|
| ACos(x), | w = s*Out1 + Out2 |
| ACosPi(x) | w = (s*Out1 + Out2)*(1/Pi) |
| ASin(x), | w = Out1*x |
| ASinPi(x) | w = Out1* x*Pi |
| ATan(y) | w = Out1*t + Out2 |
| ATanPi(y) | w = (Out1*t + Out2)*(1/Pi) |
| ATan2(x,y), | w = Out1*t + Out2 |
| ATan2Pi(x,y), | w = (Out1*t + Out2)*(1/Pi) |

9. Un procédé de calcul de fonctions mathématiques, le procédé comprenant :

le fait de recevoir, par un étage matériel de prétraitement (600), un code d'opération, ou opcode, correspondant à Asin, Acos, Atan ou Atan2 et un ou deux arguments d'entrée (x ; (x,y)) ;

par l'étage matériel de prétraitement (600), le fait de générer un ou plusieurs arguments de sortie de prétraitement (s ; (s,t) ; (v,s,t)) selon lesdits un ou deux arguments d'entrée (x ; (x,y)) et l'opcode lorsque l'opcode correspond à Asin, Atan ou Atan2, et le fait de générer un argument (s) de sortie de prétraitement selon l'un desdits un ou deux arguments d'entrée (x) et l'opcode lorsque l'opcode correspond à Acos ;

par un étage matériel de fonction inverse (602), le fait de calculer une valeur G(Z) = Acos(Z)/Sqrt (1-Z*Z) pour des opcodes correspondant à tous parmi les Asin, Acos, Atan et Atan2, où Z est un des arguments (s) de sortie du prétraitement si l'opcode correspond à Asin, Atan ou Atan2, et où Z est la valeur absolue de l'un desdits un ou deux arguments d'entrée (|x|) si l'opcode correspond à Acos, et le fait de générer un ou deux arguments de sortie de fonction inverse (Out1 ; (Out1, Out2)), G(Z) étant utilisé pour générer le premier argument de sortie de fonction inverse (Out1) ;

par un étage matériel de post-traitement (606), le fait d'obtenir le résultat final à partir du premier argument de sortie de fonction inverse (Out1) et au moins l'un desdits un ou deux arguments d'entrée (x), l'un desdits arguments de sortie de prétraitement (s ; t) et le deuxième argument de sortie de fonction inverse (Out2) selon l'opcode ;

les étages matériels de prétraitement, de fonction inverse et de post-traitement (600, 602, 606) étant configurés pour produire des résultats finaux correspondant à Asin, Acos, Atan et Atan2 selon l'opcode.

10. Le procédé selon la revendication 9, comprenant en outre le fait de calculer, par l'étage matériel de fonction inverse (602), G(Z) à partir d'une ou plusieurs tables de recherche.

11. Le procédé selon la revendication 9, comprenant en outre le fait de calculer, par l'étage matériel de fonction inverse (602), G(Z) à partir desdites une ou plusieurs tables de recherche en effectuant une approximation polynomiale utilisant des valeurs provenant desdites une ou plusieurs tables de recherche.

12. Le procédé selon la revendication 11, comprenant en outre le fait de calculer, par l'étage matériel de fonction inverse (602), l'approximation polynomiale en calculant un polynôme en utilisant les valeurs de (Z-ZO) et (Z-Z1), la ou les tables de recherche incluant des valeurs correspondant à Z0, Z0 étant inférieur à Z et des valeurs correspondant à Z1, Z1 étant supérieur à Z.

13. Le procédé selon la revendication 12, comprenant en outre le fait de calculer, par l'étage matériel de fonction inverse (602), (Z - Z1) en tant que NOT(Z-Z0) ; et/ou comprenant en outre le fait de calculer, par l'étage matériel de fonction inverse, l'approximation polynomiale en utilisant une valeur de (Z-Z0)*(Z-Z1).

14. Le procédé selon la revendication 13, comprenant en outre le fait de calculer, par l'étage matériel de fonction inverse (602), l'approximation polynomiale en calculant G(Z) = a + b*(Z-Z0) + c*(Z-Z0)*(Z-Z1), les valeurs a, b et c étant dépendantes des valeurs Z0 et Z1 et étant extraites desdites une ou plusieurs tables de recherche.

15. Le procédé selon la revendication 9, comprenant en outre le fait de calculer, par l'étage matériel de prétraitement (600), les arguments de sortie en fonction des arguments d'entrée conformément aux tableaux suivants :

| Opcode | Argument(s) d'entrée | Argument(s) de sortie |
|---|---|---|
| ACos(x), ACosPi(x) | x, ne pas tenir compte | u = 1 - x*x (utiliser Fma)<br>s = Sqrt(u) |
| ASin(x), ASinPi(x) | x, ne pas tenir compte | u = 1 - x*x (utiliser Fma)<br>s = Sqrt(u) |
| ATan(x) ATanPi(x), | x, ne pas tenir compte | u = 1 + x*x (utiliser Fma)<br>s = Sqrt(u)<br>t = s*x |
| ATan2(x,y), ATan2Pi (x,y) Entrée (s,t) | x,y | (x', y') = new(x,y)<br>u = x'*x'+ y'*y'(utiliser Dp2)<br>v = Rsqrt(u)<br>s = x'*v<br>t = x'*v |

et

| Entrée y | Entrée x | Sortie y' | Sortie x' |
|---|---|---|---|
| Nan | x | Nan | x |
| y | Nan | y | Nan |
| ±0 | Signe(x) = 0 | ±eps (t = ±0, G(s) = 1) | 4.0 |
| ±0 | Signe(x) = 1 | ±eps (t = ±0, G(s) = ±1) | -4.0 |
| ±y (y> denormal) | ±0 | ±4.0 (signe comme Y) | Eps (eps peut être 2^(-126, le plus petit nombre flottant normal positif pour fp32) |
| ±y (denormal <y<Inf) | ±Inf | ±ep s | ±4.0 |
| ±Inf | ±x (denormal <x<Inf) | ±4.0 | Eps |
| ±Inf | ±Inf | ±1 | ±1 |
| x non nul | y non nul, $|x| \geq |y|$ | y' = y*2^k1 <br><br>(k1 tel que $|x'|$ est dans l'intervalle allant de [2^40 à 2^41)) | x' = x*2^k1 <br><br>(k1 tel que $|x'|$ est dans l'intervalle allant de [2^40 à 2^41)) |
| x non nul | y non nul, $|x| < |y|$ | y' = y*2^k2 <br><br>(k2 tel que $|y'|$ est dans l'intervalle allant de [2^40 à 2^41)) | x' = x*2^k2 <br><br>(k2 tel que $|y'|$ est dans l'intervalle allant de [2^40 à 2^41)) |

et/ou
comprenant en outre le fait de calculer, par l'étage matériel de fonction inverse (602), G(Z) selon le tableau suivant :

| Opcode | Out1 | Out2 |
|---|---|---|
| ACos(x), ACosPi(x) | G($|x|$)*Signe(x) | X $\geq$ 0 ? 0 : $\pi$ |
| ASin(x), ASinPi(x) | G(s) | Non utilisé |
| ATan(x) ATanPi(x), | s < 2^(-40) ? 0 : G(s) | s < 2^(-40) ? Signe(x)*$\pi$/2 : 0 |
| ATan2(x,y), ATan2Pi(x,y), Entrée (s,t) | G(s)*(Signe(s)) (Signe(x) = Signe(s)) | X $\geq$ 0 ? 0 : Signe(t)* $\pi$ (Signe(y) = Signe(t)) |

et/ou
le résultat final correspond à l'un parmi Asin, Acos, Atan et Atan2 selon l'opcode.

16. Le procédé selon l'une quelconque des revendications 9 à 15 précédentes, dans lequel le traitement, par l'étage matériel de post-traitement (606), effectue des calculs conformément au tableau suivant :

| Opcode | Résultat final (w) |
|---|---|
| ACos(x), | w = s*Out1 + Out2 |
| ACosPi(x) | w = (s*Out1 + Out2)*(1/Pi) |
| ASin(x), | w = Out1*x |
| ASinPi(x) | w = Out1*x*Pi |

(suite)

| Opcode | Résultat final (w) |
|---|---|
| ATan(y) | w = Out1*t + Out2 |
| ATanPi(y) | w = (Out1*t + Out2)*(1/Pi) |
| ATan2(x,y), | w = Out1*t + Out2 |
| ATan2Pi(x,y), | w = (Out1*t + Out2)*(1/Pi) |

Fig. 1

Fig. 2

Fig. 3

x = 1.0+(double)i/64.0 + (2.0 - sqrt3)/256.0;
x_5 = 1.0 + (double)i/64.0+1.0/128.0;
x1 = 1.0+(double)(i+1)/64.0 - (2.0 - sqrt3)/256.0; <u>401</u>

400

a = 1.0 / sqrt(x);
b = 1.0 / (x_5 - x);
c = (1.0 / sqrt(x_5) -  a)*b;
c = (1.0/sqrt(x1) - a) / (x1 - x)*(x1 - x_5);
c = c - b / (x1 - x_5); <u>402</u>

b1 = b + c * sqrt(3.0) / 256.0;
a1 = a - (b * (2.0 - sqrt(3.0)) / 256.0) + c * (4.0 - 2.0 * sqrt(3.0)) / (double)
(1<<16); <u>403</u>

a1Int = (int)(a1 * 1<<25));
bInt = (int)((-1) * b1 * (1<<18));
cIt = (int)(c * (1<<10)); <u>404</u>

```
if ((a1Int & 0x1) != 0)
    a1int = (a1int >> 1) + 1;
else
    a1int = a1int >> 1;
if ((b1int & 0x1) != 0)
    bInt = ((bInt >> 1) + 1);
else
    b1int = ((bInt >> 1));
if ((cInt & 0x1) != 0)
    cInt = (cInt >> 1) + 1;
else
    cInt = (cInt >> 1);
Table[0][i] = a1Int & 0x7fffff
Table[1][i] = bInt;
Table[2][i] = cInt; 405
```

Fig. 4

Pipe 0 201

Float2Fixed Convert 202

Pipe 1 203

c = Table [2][i] 204

Pipe 2 205

c(x-x0), b = Table[1][i] 206

Pipe 3 207

Additional Pipeline for Output2 500

b(x-x0), c(x-x0)(x-x1)
a = Table [0][i] 208

Pipe 4 209

a + b(x-x0) + c(x-x0)(x-x1) 210

Pipe 5 211

Fixed2Float Convert 212

Pipe 6 213

Fig. 5

Fig. 6

**EP 3 079 056 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012054256 A1